Europäisches Patentamt

European Patent Office

Office européen des brevets

(19)

(11) Veröffentlichungsnummer: **0 106 983**
**A1**

(12) # EUROPÄISCHE PATENTANMELDUNG

(21) Anmeldenummer: **83108523.8**

(51) Int. Cl.³: **B 61 L 15/00**

(22) Anmeldetag: **30.08.83**

(30) Priorität: **16.10.82 DE 3238452**

(43) Veröffentlichungstag der Anmeldung: **02.05.84**
**Patentblatt 84/18**

(84) Benannte Vertragsstaaten: **AT CH FR GB IT LI**

(71) Anmelder: **Messerschmitt-Bölkow-Blohm Gesellschaft mit beschränkter Haftung, Robert-Koch-Strasse, D-8012 Ottobrunn (DE)**

(72) Erfinder: **Riegler, Manfred, Dipl.-Ing., Wiesenstrasse 3, D-8011 Brunnthal (DE)**

(54) **Einrichtung zum Überwachen von technischen Einrichtungen von Eisenbahnzügen.**

(57) Die Erfindung bezieht sich auf eine Einrichtung zum Überwachen von technischen Einrichtungen eines Eisenbahnzuges. Um die Wartung und Vorbereitungszeit für die Inbetriebnahme eines abgestellten Eisenbahnzuges zu vereinfachen, werden gemäß der Erfindung an technischen Einrichtungen des Zuges Überwachungsvorrichtungen ($S_{11}$ bis $S_{nw}$) vorgesehen, die ihre Daten einer zentralen Datenverarbeitungsanlage (3) übermitteln. In der Datenverarbeitungsanlage werden die Daten von mehreren Zügen ausgewertet und über eine Datenleitstelle (3') an Datenendstellen ($T_1$ bis $T_n$, DS) gesendet. Diese Datenendstellen geben entweder dem Wartungspersonal Anweisungen über notwendige Arbeiten, oder es ist möglich, über die Datenendstellen direkt technische Einrichtungen des Zuges zu schalten, so z.B. rechtzeitig vor Inbetriebnahme eines Zuges diesen vorzuklimatisieren.

EP 0 106 983 A1

-2-

MESSERSCHMITT BÖLKOW BLOHM GMBH

Ottobrunn, den
14.10.82
BT01-Cz
9290

Einrichtung zum Überwachen von technischen Einrichtungen von Eisenbahnzügen

Die Erfindung bezieht sich auf eine Einrichtung zum Überwachen von technischen Einrichtungen eines Eisenbahnzuges.

Aus der DE-AS 27 26 930 ist es bekannt, technische Einrichtungen eines Eisenbahnzuges während der Fahrt automatisch zu überwachen, so z.B. Heißläufersensoren vorzusehen, deren Ausgangssignale nach entsprechender Signalbearbeitung über die vorhandenen Druckluftleitungen des Eisenbahnzuges als akustische Signale weiterzuleiten und so z.B. dem Lokführer zu übermitteln. Mit einer solchen Einrichtung können die technischen Einrichtungen eines Eisenbahnzuges während des Betriebs laufend überwacht werden; an den Waggons des Eisenbahnzuges auftretende Defekte können so frühzeitig erkannt werden. Diese bekannte Einrichtung zur Übertragung von Signalen ist jedoch auf eine Signalübertragung lediglich in einer Richtung, d.h. von den Überwachungseinrichtungen zum Lokführer beschränkt. Außerdem ist die Übertragung von Daten auf Druckluft beschränkt, die lediglich während des Fahrbetriebes des Eisenbahnzuges zur Verfügung steht.

Die tägliche Inbetriebnahme von Eisenbahnzügen erfordert neben den Reinigungsarbeiten auch die Überprüfung der technischen Einrichtungen, ferner die Feststellung von Mängeln und die Durchführung kleinerer Reparaturen sowie die Vorklimatisierung der einzelnen Waggons. Für diese Arbeiten muß Zug- und Wartungspersonal vor dem eigentlichen Fahreinsatz des Eisenbahnzuges bereitgehalten werden. Der Zeitaufwand für diese Arbeiten verursacht Kosten und schränkt ferner die mögliche Einsatzzeit des Eisenbahnzugs pro Zugbesatzung ein.

Es wäre wünschenswert, den Zeitaufwand für diese Arbeiten herabzusetzen, trotzdem dabei jedoch alle notwendigen Arbeiten erledigen zu können. Hier könnten etwa die oben genannten Heißläufersensoren eingesetzt werden, die dem Wartungspersonal automatisch anzeigen, welche Waggons nicht mehr betriebsfähig sind oder welche Reparaturen ausgeführt werden müssen. Auch bei Einsatz derartiger automatischer Überwachungseinrichtungen verbleiben jedoch weiterhin die Überprüfung des Eisenbahnzuges und auch die vor der Inbetriebnahme des Eisenbahnzuges notwendigen Arbeiten , so z.B. die Vorklimatisierung der einzelnen Waggons , dem Wartungspersonal. Zug- und Wartungspersonal müssen daher vor Antritt jeder ersten Fahrt zur Stelle sein.

Der Erfindung liegt die Aufgabe zugrunde, die notwendigen Vorbereitungsarbeiten vor der Inbetriebnahme eines Eisenbahnzuges zu koordinieren und das Zug- und Wartungspersonal gezielt einzusetzen.

Diese Aufgabe ist gemäß der Erfindung durch die im Kennzeichen des Patentanspruches 1 angegebenen Merkmale gelöst.

Gemäß diesen Merkmalen besteht die Möglichkeit, eine Vielzahl von nach der Fahrzeit abgestellten Eisenbahnzügen zu überwachen, die bei der Überwachung gewonnenen Daten der einzelnen technischen Einrichtungen einer zentralen Datenverarbeitungsanlage zu übermitteln, die diese nach entsprechender Datenverarbeitung an eine Datenleitstelle weiterleitet. Von der Datenleitstelle werden an entsprechende Datenendstellen Daten übermittelt, durch die z.B. dem Zug- und Wartungspersonal die auszuführenden Arbeiten mitgeteilt werden. Die Datenendstellen können jedoch auch automatisch Funktionen von technischen Einrichtungen auslösen, so z.B. die Heizung eines Eisenbahnzuges vor Inbetriebnahme einschalten, um den Zug vorzuklimatisieren.

Weitere Vorteile und Ausgestaltungen der Erfindung gehen aus den Unteransprüchen in Verbindung mit der Beschreibung hervor, in der die Erfindung in einem Ausführungsbeispiel anhand der Zeichnung näher erläutert ist. In der Zeichnung stellen dar:

Figur 1     ein Blockdiagramm einer Einrichtung zum Überwachen von technischen Einrichtungen eines abgestellten Eisenbahnzuges gemäß der Erfindung;

Figur 2     ein Schemabild der Einrichtung gemäß Figur 1.

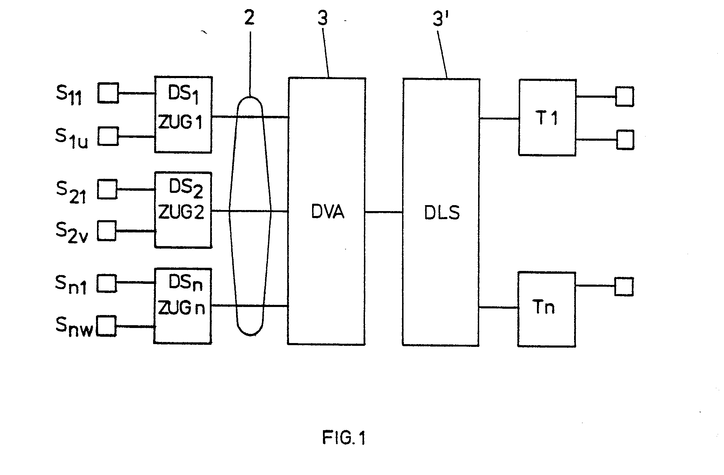

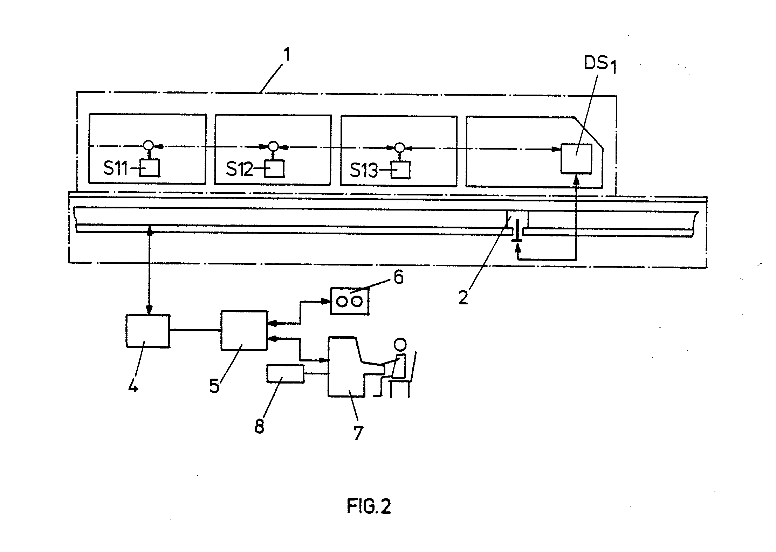

Ein abgestellter Eisenbahnzug 1 mit einer Lokomotive und mehreren Waggons weist an unterschiedlichen technischen Einrichtungen (hier nicht dargestellt) eine Vielzahl von Überwachungseinrichtungen S auf, z.B. Sensoren für die Innentemperatur der einzelnen Waggons, Sensoren für die Lagerabnutzung der Radlager, Sensoren für die Energieanlagen des Zuges usw. Der Bezeichnung der Sensoren S sind zwei Indices beigefügt, wobei der erste Index die Nummer des überwachten Zuges und der zweite Index die Nummer des jeweiligen Sensors kennzeichnet. Bei dem in Figur 2 dargestellten Beispiel sind dementsprechend drei Sensoren $S_{11}$, $S_{12}$ und $S_{13}$ vorgesehen, die Anzahl ist beispielhaft und wird dementsprechend in Figur 1 mit $S_{1u}$ bezeichnet. Die Sensoren eines zweiten überwachten Zuges tragen demnach die Bezeichnungen $S_{21}$ bis $S_{2v}$. Die Sensoren des n-ten Zugs sind mit $S_{n1}$ bis $S_{nw}$ bezeichnet. Die Sensorsignale aller Sensoren S eines Zuges 1 werden einer Datenstation DS , z.B. in der Lokomotive des Eisenbahnzuges übermittelt. Auch diese Datenstationen sind in Figur 1 mit einem Index entsprechend der Zugnummer, d.h. dem Index 1 bis n versehen. Die Daten aus diesen Datenstationen DS werden über eine Übertragungseinrichtung 2 einer zentralen Datenverarbeitungsanlage 3 übermittelt. Die Datenübertragung kann z.B. über Schlitzhohlleiter entlang der Eisenbahnschienen erfolgen, wie dieses in Figur 2 symbolisch mit 2 bezeichnet ist. Die Datenverarbeitungsanlage 3 weist eine Anpassungsschaltung 4 zum Anpassen der aus dem Schlitzhohlleiter ausgekoppelten Daten an die elektronischen Rechenanlagen der Datenverarbeitungsanlage auf, ferner einen Rechner 5, einen Speicher 6, einen Monitor 7 mit einer Eingabe sowie einen Drucker 8 und eventuell andere Nebengeräte .    Über die Eingabe des Monitors 7 können Daten der Sensoren von einzelnen Zügen abgefragt werden. Die Daten können dann auch über den Drucker 8 ausgedruckt werden. Aufgrund dieser Daten können z.B. an die Datenstation DS des entsprechenden Zuges oder an eine hier nicht dargestellte, vom jeweiligen Zug getrennte Datenendstelle Daten übermittelt werden, die anzeigen, welche Arbeiten an dem abgestellten Zug notwendig sind. Zur Verteilung der einzelnen Daten an die Datenendstellen der unterschiedlichen Züge ist eine hier im Rechner 5 integrierte Datenleitstelle 3' (Figur 1) vorgesehen. Aufgrund der von der zentralen Datenverarbeitungsanlage 3 empfangenen Sensorsignale können einzelne  technische · Einrichtungen unterschiedlicher Züge auch automatisch betrieben werden: So kann z.B. die Heizung eines Zuges rechtzeitig vor der Inbetriebnahme eingeschaltet werden, ohne daß hierzu Wartungspersonal notwendig ist.

Mit dem beschriebenen System können von der zentralen Datenverarbeitungsanlage zu jeder Zeit der Betriebszustand bzw. Mängel des Zugsystems erfaßt werden und nach Auswertung durch den Rechner weitergeleitet werden. Über den Drucker können für jeden Zug entsprechende Wartungs- und Betriebsprotokolle zentral erstellt werden. Dieses Protokoll dient zur Anleitung des Wartungspersonals , in der zur Verfügung stehenden Standzeit des Zuges gezielt die notwendigen Arbeiten vorzunehmen, z.B. Teile auszutauschen oder Mängel zu beheben. Der Zug kann außerdem automatisch vor dem geplanten Einsatz vorklimatisiert werden. Diese Vorklimatisierung kann automatisch vom Rechner gesteuert werden. Durch die laufende Überwachung über die zentrale Datenverarbeitungsanlage wird der Zustand der unterschiedlichen Züge überprüft und der Zug erst nach Erfüllung aller notwendigen Arbeiten zum Betrieb freigegeben. Selbstverständlich ist es auch möglich, über die zentrale Datenverarbeitungsanlage und die Übertragungseinrichtung Informationen an den Zugführer oder das Steuersystem des Zuges zu übermitteln. Auch die Übermittlung von sonstigen Informationen , z.B. Informationen über die Disposition des Zugeinsatzes sind möglich.

Ferner ist es möglich, vom Zugpersonal oder dem Wartungspersonal eingegebene Mängelmeldungen zu speichern und auf Abruf wiederzugeben. Diese Mängelmeldungen können etwa in den Datenstationen DS eines Zuges eingegeben werden.

Ebenso können die während des Fahrbetriebes allenfalls aufgetretenen Störungen oder vom Normalzustand abweichende Zustände (z.B. Schmiermitteltemperaturen) fahrzeugintern in der Datenendstelle $DS_1$ gespeichert werden. Die abgespeicherten Daten werden bei abgestelltem Zug abgerufen, in der zentralen Rechenanlage ausgewertet und damit Aussagen über die notwendigen Arbeiten gewonnen. Damit eröffnet sich die Möglichkeit in weiterem Umfang von der heutigen Wartungsphilosophie der planmäßigen Fristarbeiten abzugehen und auf die wesentlich kosteneffektivere bedarfsabhängige Wartung übergegangen werden. Zum Beispiel Überarbeiten der Radsätze erst dann, wenn die gemessenen dynamischen Lasten am Rad definierte Pegel überschreiten.

Durch einen Verbund der verschiedenen örtlichen Überwachungszentralen kann das gesamte rollende Material erfaßt werden. Dies ermöglicht bei entsprechender Zugeinsatzdispostion verbesserte und gleichmäßige Auslastung von Ausbesserungswerken bei erhöhten Zugeinsatzzeiten.

MESSERSCHMITT BÖLKOW BLOHM GMBH      Ottobrunn,den 14.10.82
BT01-Cz
9290

Einrichtung zum Überwachen von technischen Einrichtungen von
Eisenbahnzügen

## P a t e n t a n s p r ü c h e

1. Einrichtung zum Überwachen von technischen Einrichtungen
   von Eisenbahnzügen gekennzeichnet durch den technischen
   Einrichtungen zugeordnete Überwachungseinrichtungen
   $(S_{11}..S_{nw})$ , eine zentrale Datenverarbeitungsanlage (3),
   eine Übertragungseinrichtung (2) zwischen den Überwachungseinrichtungen und der zentralen Datenverarbeitungsanlage sowie eine mit der Datenverarbeitungsanlage gekoppelte Datenleitstelle (3') zum Übermitteln
   der in der Datenverarbeitungsanlage aufbereiteten Daten
   an Datenendstellen $(T_1$ bis $T_n$, $DS_1)$.

2. Einrichtung nach Anspruch 1, dadurch gekennzeichnet, daß
   die Datenübermittlung zwischen den Überwachungseinrichtungen $(S_{11}$ bis $S_{nw})$ und der zentralen Datenverarbeitungsanlage (3) und zwischen dieser und den einzelnen Datenendstellen ($T_1$ bis $T_n$, $Ds_1$) bei abgestellten Zügen erfolgt.

3. Einrichtung nach einem der vorhergehenden Ansprüche, dadurch gekennzeichnet, daß die Übertragungseinrichtung (2)
eine Schlitzhohlleitereinrichtung (4) ist.

4. Einrichtung nach einem der vorhergehenden Ansprüche , dadurch gekennzeichnet, daß die zentrale Datenverarbeitungsanlage (3) technische Einrichtungen des Zuges automatisch
steuert, insbesondere die Zugheizung.

0106983

1/2

FIG. 1

9290

FIG.2

9290

Europäisches
Patentamt

**EUROPÄISCHER RECHERCHENBERICHT**

Nummer der Anmeldung

EP 83 10 8523

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | NTIS NATIONAL TECHNICAL INFORMATION SERVICE, 21. September 1977, Springfield, US "Derailment warning system" * Insgesamt * | 1 | B 61 L 15/00 |
| A,D | DE-A-2 726 930 (KRAUSS-MAFFEI) * Anspruch 1 * | 1 | |
| A | US-A-4 250 484 (PARKE) * Zusammenfassung * | 1 | |
| A | SIGNAL & DRAHT, Band 73, Nr. 5, Mai 1981, Seiten 114-120, Darmstadt, DE H. SCHWAB: "FÜSTE - Fernüberwachung und Fernsteuerung technischer Einrichtungen bei der Bundesbahndirektion Stuttgart" * Insgesamt * | 1,4 | RECHERCHIERTE SACHGEBIETE (Int. Cl. ³) B 61 L B 61 B |

Der vorliegende Recherchenbericht wurde für alle Patentansprüche erstellt.

| Recherchenort DEN HAAG | Abschlußdatum der Recherche 20-01-1984 | Prüfer SGURA S. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82